(19) Europäisches Patentamt

European Patent Office

Office européen des brevets

(11) **EP 0 631 253 B1**

(12) **EUROPEAN PATENT SPECIFICATION**

(45) Date of publication and mention
of the grant of the patent:
**30.08.2000  Bulletin 2000/35**

(51) Int. Cl.⁷: **G06T 11/20**

(21) Application number: **94304472.7**

(22) Date of filing: **20.06.1994**

(54) **A device for use in the digital processing of a graphic image containing a straight line**

Anordnung zur Verwendung bei der digitalen Verarbeitung von Bildern mit einer geraden Linie

Dispositif utilisé dans le traitement numérique d'images graphiques comprenant une ligne droite

(84) Designated Contracting States:
**DE FR GB IT**

(30) Priority:  **21.06.1993 GB 9312747**

(43) Date of publication of application:
**28.12.1994  Bulletin 1994/52**

(73) Proprietor: **QUESTECH LIMITED**
**Wokingham Berkshire RG11 2PP (GB)**

(72) Inventor: **Billing, Robert**
**Crowthorne RG11 7JR (GB)**

(74) Representative:
**Bubb, Antony John Allen et al**
**GEE & CO.**
**Chancery House**
**Chancery Lane**
**London WC2A 1QU (GB)**

(56) References cited:
**EP-A- 0 314 289          EP-A- 0 334 600**

• **IBM TECHNICAL DISCLOSURE BULLETIN, vol.**
**20, no. 9, February 1978 NEW YORK, US, pages**
**3703-3706, ANONYMOUS 'Generation of Points**
**Using Bresenham's Algorithm. February 1978.'**

**Description**

This invention concerns a device for use in the digital processing of a graphic image containing a straight line, and has particular applications in computer graphics and television image processing. In one embodiment it is a device which will construct a straight line between any two points in a picture area, and which will report correctly, for any point described by rational number coordinates in the picture area, which side of the line the point lies on, or if the line passes through the point.

In the process of generating a straight line in a graphics image, it is known to provide means for generating approximate two dimensional coordinates of the straight line, said generating means including first means for providing, in correspondence with regularly incremented values of one coordinate, the approximate values of the second coordinate together with, for each said approximate value, an error signal comprising a scaled value of the difference between the said approximate value and the actual second coordinate value of the required point on the line.

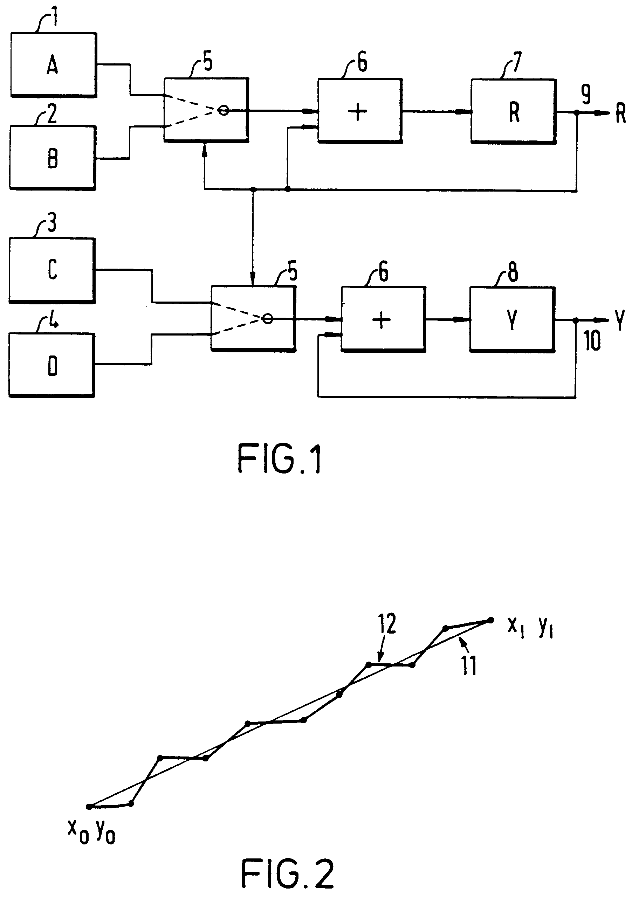

Such an arrangement is illustrated in Fig.1 and can be utilised to draw a line between points (X0,Y0) and (X1,Y1) on a plane as shown in Fig.2.

Before drawing a line the registers 1-4 of Fig.1 are loaded with the following values:

Let: Yinc = (Y1-Y0)/(X1-X0) rounded towards minus infinity

$$A = Y0 - Y1 + ( X1 - X0 ) * Yinc \qquad (1)$$

$$B = Y0 - Y1 + ( X1 - X0 ) * ( Yinc + 1 ) \qquad (2)$$

$$C = Yinc \qquad (3)$$

$$D = Yinc + 1 \qquad (4)$$

the accumulator 7 is set to zero and the accumulator 8 is loaded with Y0.

Then for successive values of X from X0 to X1 the following operation is performed.

The data selectors 5 are set in response to the sign of the number in R such that if it is zero or positive then data is taken from 1 and 3, if it is negative then data is taken from 2 and 4. Since the number in 1 will be zero or negative, and that 2 will be positive, the number in R will tend to oscillate around zero, advancing Y in the accumulator 8 by Yinc or Yinc=1 in appropriate proportions to draw a fair approximation to the required line. The values of R and Y are presented at the outputs 9 and 10. This is illustrated in Figure 2 where 11 is the required line, and 12 is the sequence of values of Y generated by the arrangement in Figure 1.

As will be well understood by one skilled in the art, the number R comprises a running error term that is derived according to Bresenham's Algorithm and comprises a number that is used to store the actual distance between the line to be drawn and the point selected, taken in a direction perpendicular to the axis of greatest movement (see EP 0334600 A2 para 3 lines 13-15). Thus, in the case illustrated in Figure 2, since the line to be drawn extends at an angle of less than 45° to the X axis which is therefore the axis of greatest movement, the number R represents the error comprising the distance on the Y axis between the selected value of Y and the true point on the line to be drawn. Since the actual value of the error will be a fractional value and the application of Bresenham's Algorithm to the apparatus of Figure 1 requires the use of whole numbers, the error term R comprises the actual error value scaled such that all possible values of R comprise whole numbers. In the illustrated example R comprises the actual error value multiplied by (X1-X0) units.

However, as may be seen from the diagram the standard technique is not sufficiently accurate for many purposes since division of the error term R to obtain the actual error value cannot be performed accurately in a digital process. Also the position of the required line relative to intermediate points cannot be determined.

EP-A-0,314,289 describes a system for generating multiple pixels in a single machine cycle, by employing a method of parallel processing. The system enables simultaneous rather than incremental generation of coordinate values, but also relies upon Bresenham's Algorithm and thus suffers from the same drawbacks as outlined above.

It is accordingly an object of the present invention to provide a means enabling an increase in the accuracy of the above described technique to enable calculations to be performed in relation to the true coordinate value of a point on the line, using rational numbers.

This object is achieved by the features of Claims 1 and 5.

It is a preferred object of the invention also to enable such calculations for intermediate points on the line.

This object is achieved by the features of Claims 2 and 6.

Further preferred features and advantages of the invention will become apparent from the following description and the subordinate claims, taken in conjunction with the accompanying drawings, in which:

Fig.1 is a block circuit diagram of a known device used in computer graphics;
Fig.2 is a diagram illustrating the operation of the device of Fig.1;
Fig.3 is a block diagram of a device in accordance with the present invention, and
Fig.4 is a view of a detail of the device of Fig.3

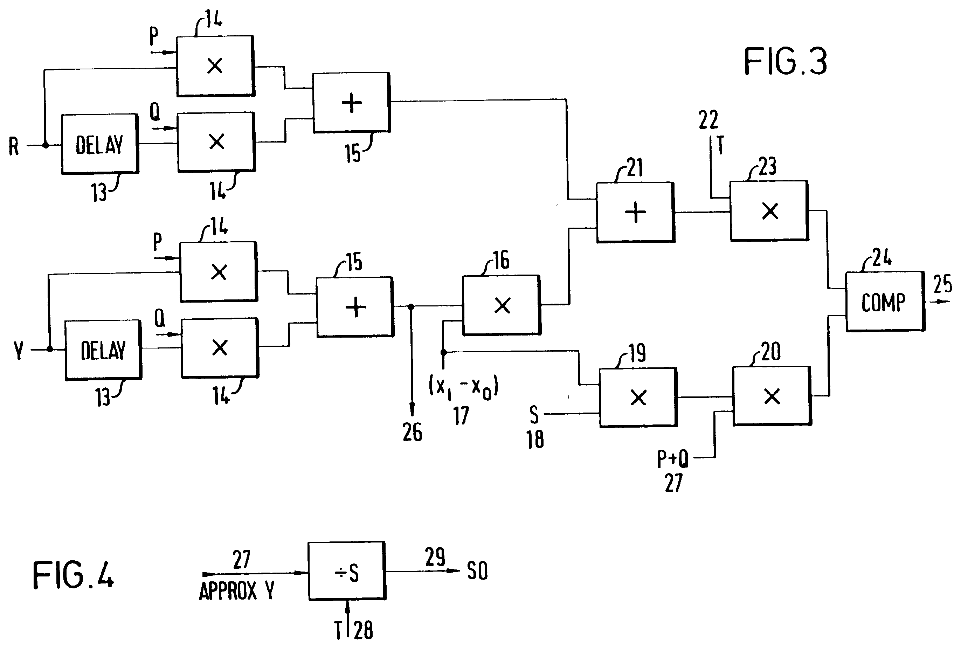

Referring to the drawings, there is shown in Fig.3 an additional circuit in accordance with the invention that may be added to the arrangement of Fig.1 in order to obtain more accurate information about the coordinate value Y.

Referring to Figure 3, it may be assumed that this invention is being used as part of a larger system, such as a computer graphics system, which wishes to draw a straight line to a high accuracy, and which therefore requires the test described to be performed a large number of times, but which is capable of performing simple calculations and presenting the results to the equipment described, but is not capable, in software, of performing the calculation performed here at a sufficient speed.

The values of R and Y are passed through the delays 13 in order to obtain two consecutive values of each. These values are then multiplied at 14 by integers P and Q, and the results added at 15. This produces values for R and Y at a fractional position which is P/(P+Q) of the way between the successive values from the accumulators, and is scaled by (P+Q). For example if P=5 and Q=3 then the values at the outputs of 15 are eight times the value which is five eighths of the way between the successive values of Y and R. Note that this calculation is performed exactly, and that there is no rounding error involved.

The number R represents the difference between the value of Y and the Y coordinate of a point with the given value of X which lies exactly on a line joining (X0,Y0) to (X1,Y1). A value of R of (X1-X0) would indicate a departure of +1, and in general the error in Y is R/(X1-X0) units. Performing this division would lead to loss of accuracy, as the quotient could not be expressed exactly in many cases.

This invention, however, allows a test to be performed which will determine unambiguously on which side of a value of Y expressed as S/T, where S and T are integers, the true value of Y lies, and hence on which side of a point, the coordinates of which are expressed as rational numbers (such as 3/7 by 9/17), the line passes.

If the number at the outputs of the adders are denoted by Rs and Ys, then the true Y coordinate at the fractional X position which is represented by P and Q is

$$( Ys + Rs / ( X1 - X0 ) ) / ( P + Q )$$

once again we avoid doing the division, and work out

$$( X1 - X0 ) * Ys + Rs$$

using the multiplier 16 and adder 21. Note that if this calculation is done using integer arithmetic then there is no loss of accuracy, and all the input data has still been preserved. The result is then multiplied by the integer T in multiplier 23. Simultaneously we work out

$$(X1 - X0 ) * S * ( P + Q )$$

using the multipliers 19 and 20, and compare the results at 24. The result of this comparison can indicate that Y is greater than, equal to or less than S/T.

The numerical quantities P,Q, (X1-X0), S,P+Q and T are input to the device at 14, 17, 18, 22 and 27 from an external device, commonly a microprocessor.

An approximate value of Y can be derived at 26. This can be used to derive a first guess value of S as shown in the arrangement of figure 4. Here a lookup table is used to find values of Y/T rounded towards minus infinity, Y entering at 27 and the quotient S0 being produced at 29.

This value of S can be used as input to the main part of the invention, being fed back in at 18, and the result of the comparison being used to increment S0 until a value of S which makes S/T >= Y is found. This method can be used to determine the value of S for a given T which is on, or lies as closely as possible to a desired side of, the value of Y.

**Claims**

1.  A device for use in the digital processing of a graphic image containing a straight line and having means for generating approximate two dimensional coordinates (X,Y) of the straight line, said generating means including first means (10) for providing, in correspondence with regularly incremented values of one coordinate (X), the approximate values of the second coordinate (Y), second means (9) for providing for each said approximate value (Y), an error signal(R)generated according to Bresenham's Algorithm and comprising the difference between the said approximate value and the actual second coordinate value (Y) of the required point on the line according to a predetermined scale such that all possible values of the error signal comprise whole numbers, characterised in that said device comprises third means (16) for multiplying values derived from said first providing means (10)by the said predetermined scale (X1-X0), fourth means (21) for adding values derived from said third means (16) and said second means (9), fifth means (23) for multiplying values derived from said fourth means (21) by an integer T, sixth means (19) for multiplying an integer S by said predetermined scale (X1-X0) and seventh means (24) for comparing values derived from said fifth and sixth means and providing an output signal, for incrementing one of said integers S and T until the first and second values are substantially equal whereby the coordinates of the point on said line are expressed as the digital value of the one coordinate (X) and the second coordinate (Y) expressed as the rational number S/T.

**2.** A device according to Claim 1, further comprising eighth means (13-15) coupled between said first means (10) and said sixth means (19), ninth means (13-15) coupled between second means (9) and said fourth means (21) and tenth means (20) coupled between said sixth means (19) and said seventh means (24), each of said eighth and ninth means comprising a delay means (13), multipliers (14) respectively connected at an input and an output of said delay means and arranged to multiply received signals by integers P and Q and means (15) for summing output signals from said multipliers (14), and said tenth means (20) comprising a multiplier arranged to multiply received signals by the sum of the integers P and Q.

**3.** A device according to Claim 1 or 2 further comprising means for incrementing one of said integers S and T in a direction determined by the output signal of said seventh means (24) to reduce the difference between the compared values to a minimum.

**4.** A device according to Claim 3, wherein the arrangement is such that it is the integer S that is incremented and said device further includes, for providing an initial trial value of S, a memory means (÷S) providing a look up table and means (27,28) for addressing said look up table with values derived from said first means (10) and with said integer T.

**5.** A process for the digital calculation of the coordinates of a point on a straight line from the values of one coordinate (X) the approximate value of a second coordinate (Y) and an error term (R) generated according to Bresenham's Algorithm and comprising the value of the error between the approximate value of the second coordinate (y) and the exact value of the second coordinate of the point on the line, to a predetermined scale (X1-X0) such that all possible values of the error term (R) comprise whole numbers, characterised in that it comprises the steps of multiplying the said approximate value of the second coordinate (y) by the said predetermined scale (X1-X0), adding the scaled approximate value (y)and the scaled error term (R), to provide an output value, multiplying a first trial integer S by said predetermined scale (X1-X0), to provide a first value for comparison, multiplying said output value by a second trial integer T to obtain a second value for comparison, comparing said first and second values and incrementing one of said integers S and T until the first and second values are substantially equal whereby the coordinates of the point on said line are expressed as the digital value of the one coordinate (X) and the value of the second coordinate (Y) expressed as the rational number S/T.

**6.** A process according to Claim 5, wherein the approximate value of said second coordinate (Y) and the value of said error term (R) are in each case values intermediate two consecutive digitally calculated values and derived by multiplying said consecutive values by integers P and Q respectively and summing the multiplied consecutive values, and wherein said trial integer S is further multiplied by the sum of the integers P and Q prior to said comparison.

**7.** A process according to Claim 5 or 6, wherein said first trial integer is obtained by addressing a look-up table with the integer T and the approximate value of said second coordinate (Y).

**Patentansprüche**

**1.** Vorrichtung zur Verwendung bei der digitalen Verarbeitung eines grafischen Bildes, welches eine gerade Linie aufweist, versehen mit einer Anordnung zum Erzeugen von genäherten zweidimensionalen Koordinaten (X, Y) der geraden Linien, wobei die Erzeugungsanordnung versehen ist mit einer ersten Anordnung (10), um gemäß regulär inkrementierten Werten von einer Koordinate (X) die genäherten Werte der zweiten Koordinate (Y) bereitzustellen, einer zweiten Anordnung (9), um für jeden der genäherten Werte (Y) ein gemäß des Bresenham-Algorithmus erzeugtes Fehlersignal (R) zu erzeugen, welches die Differenz zwischen dem genäherten Wert und dem tatsächlichen zweiten Koordinatenwert (Y) des benötigten Punktes auf der Linie gemäß einem vorbestimmten Maßstab beinhaltet, so dass alle möglichen Werte des Fehlersignals ganze Zahlen umfassen, dadurch gekennzeichnet, daß die Vorrichtung versehen ist mit einer dritten Anordnung (16), um von der ersten Bereitstellungsanordnung (10) abgeleitete Werte mit dem vorbestimmten Maßstab (X1-X0) zu multiplizieren, einer vierten Anordnung (21), um von der dritten Anordnung (16) und der zweiten Anordnung (9) abgeleitete Werte zu addieren, einer fünften Anordnung (23), um von der vierten Anordnung (21) abgeleitete Werte mit einer Ganzzahl T zu multiplizieren, einer sechsten Anordnung (19) um eine Ganzzahl S mit dem vorbestimmten Maßstab (X1-X0) zu multiplizieren, und einer siebten Anordnung (24), um von der fünften und der sechsten Anordnung abgeleitete Signale zu vergleichen und ein Ausgangssignal bereitzustellen, um eine der Ganzzahlen S und T zu inkrementieren, bis der erste und der zweite Wert im wesentlichen gleich sind, wobei die Koordinaten des Punktes auf der Linie als ein digitaler Wert der einen Koordinate (X) und der zweiten Koordinate (Y), dargestellt als die rationale Zahl S/T, ausgedrückt werden.

**2.** Vorrichtung nach Anspruch 1, ferner versehen mit einer achten Anordnung (13-15), die zwischen der ersten Anordnung (10) und der sechsten Anordnung (19) angeschlossen ist, einer neunten Anordnung (13-15), die zwischen der zweiten Anordnung (9) und der vierten Anordnung (21) angeschlossen ist, sowie einer zehnten Anordnung (20), die zwischen der sechsten Anordnung (19) und der siebten Anordnung (24) angeschlossen ist, wobei sowohl die achte als auch die neunte Anordnung jeweils eine Verzögerungsanordnung (13), Multiplizierer (14), die entsprechend an einen Eingang und an einen Ausgang der Verzögerungsanordnung angeschlossen sind und angeordnet sind, um erhaltene Signale mit Ganzzahlen P und Q zu multiplizieren, sowie eine Anordnung (15) aufweisen, um Ausgangssignale der Multiplizierer (14) zu summieren, und wobei die zehnte Anordnung (20) einen Multiplizierer aufweist, der angeordnet ist, um erhaltene Signale mit der Summe der Ganzzahlen P und Q zu multiplizieren.

**3.** Vorrichtung nach Anspruch 1 oder 2, ferner versehen mit einer Anordnung zum Inkrementieren einer der Ganzzahlen S und T in einer Richtung, die durch das Ausgangssignal der siebten Anordnung (24) bestimmt ist, um die Differenz zwischen den verglichenen Werten auf ein Minimum zu reduzieren.

**4.** Vorrichtung nach Anspruch 3, bei welcher die Anordnung so getroffen ist, daß die Ganzzahl S inkrementiert wird, wobei die Vorrichtung ferner zum Bereitstellen eines anfänglichen Probierwertes für S eine Speicheranordnung (÷S) aufweist, die eine Nachschlagtabelle bereitstellt, sowie eine Anordnung (27, 28) zum Adressieren der Nachschlagtabelle mit Werten, die von der ersten Anordnung (10) abgeleitet wurden sowie mit der Ganzzahl T.

**5.** Vorrichtung für die digitale Berechnung der Koordinaten eines Punktes auf einer geraden Linie aus Werten für eine Koordinate (X), dem Näherungswert einer zweiten Koordinate (Y) und einem Fehlerterm (R), der gemäß dem Bresenham-Algorithmus erzeugt wurde und den Wert des Fehlers zwischen dem Näherungswert der zweiten Koordinate (Y) und dem exakten Wert der zweiten Koordinate des Punktes auf der Linie gemäß einem vorbestimmten Maßstab (X1 -X0) aufweist, so daß alle möglichen Werte des Fehlerterms (R) ganze Zahlen sind, dadurch gekennzeichnet, daß die nachstehenden Schritte erfolgen: Multiplizieren des Näherungswertes der zweiten Koordinate (Y) mit dem vorbestimmten Maßstab (X1-X0), Addieren des skalierten Näherungswertes (Y) und des skalierten Fehlerterms (R) zum Bereitstellen eines Ausgangswerts, Multiplizieren einer ersten Probierganzzahl S mit dem vorbestimmten Maßstab (X1-X0), um einen ersten Vergleichswert bereitzustellen, Multiplizieren des Ausgangswerts mit einer zweiten Probierganzzahl T, um einen zweiten Vergleichswert zu erhalten, Vergleichen des ersten und des zweiten Wertes und Inkrementieren einer der Ganzzahlen S und T, bis der erste und der zweite Wert im wesentlichen gleich sind, wodurch die Koordinaten des Punktes auf der Linie als der Digitalwert der einen Koordinate X und der Wert der zweiten Koordinate Y ausgedrückt als die rationale Zahl S/T ausgedrückt werden.

**6.** Verfahren nach Anspruch 5, bei welchem der Näherungswert der zweiten Koordinate (Y) und der Wert des Fehlerterms (R) in jedem Fall Werte sind, die zwischen zwei nachfolgenden, digital berechneten Werten liegen und durch Multiplizieren der nachfolgenden Werte mit Ganzzahlen T bzw. Q und Summieren der multiplizierten nachfolgenden Werte abgeleitet werden, und bei welchem die Probierganzzahl S ferner mit der Summe der Ganzzahlen P und Q vor dem Vergleich multipliziert wird.

**7.** Verfahren nach Anspruch 5 oder 6, bei welchem die erste Probierganzzahl erhalten wird, indem eine Nachschlagtabelle mit der Ganzzahl T und dem Näherungswert der zweiten Koordinate (Y) adressiert wird.

**Revendications**

**1.** Dispositif destiné à être utilisé dans le traitement numérique d'une image graphique comprenant une ligne droite et ayant des moyens pour générer des coordonnées bi-dimensionnelles approchées (X, Y) de la ligne droite, lesdits moyens de génération comprenant des premiers moyens (10) pour délivrer, en correspondance avec des valeurs régulièrement incrémentées d'une coordonnée (X), les valeurs approchées de la deuxième coordonnée (Y), des second moyens (9) pour délivrer, pour chacune desdites valeurs approchées (Y), un signal d'erreur (R) engendré suivant l'algorithme de Bresenham et comprenant la différence entre ladite valeur approchée et la valeur réelle de la seconde coordonnée (Y) du point requis sur la ligne, selon une échelle prédéterminée, de sorte que toutes les valeurs possibles du signal d'erreur constituent des nombres entiers, **caractérisé en ce que** ledit dispositif comporte des troisièmes moyens (16) pour multiplier les valeurs, provenant desdits premiers moyens (10) pour délivrer, par ladite échelle prédéterminée (X1 - X0), des quatrièmes moyens (21) pour additionner les valeurs provenant desdits troisièmes moyens (16) et desdits deuxièmes moyens (9), des cinquièmes moyens (23) pour multiplier les valeurs provenant desdits quatrièmes moyens (21) par un entier T, des sixièmes moyens (19) pour multiplier un entier S par ladite échelle prédéterminée (X1 - X0) et des septièmes moyens (24) pour comparer les valeurs provenant desdits cinquième et sixièmes moyens et délivrer un signal de sortie, pour incrémenter un desdits entiers S et T jusqu'à ce que les première et deuxième valeurs soient sensiblement égales, grâce à quoi les coordonnées du point sur ladite ligne sont exprimées par la valeur numérique de la première coordonnée (X) et la valeur de la deuxième coordonnée (Y) exprimée par le nombre rationnel S / T.

2. Dispositif selon la revendication 1, **caractérisé en ce qu'**il comporte, en outre, des huitièmes moyens (13 - 15) inséré entre lesdits premiers moyens (10) et lesdits sixièmes moyens (19), des neuvièmes moyens (13 - 15) insérés entre les deuxièmes moyens (9) et lesdits quatrièmes moyens (21) et des dixièmes moyens (20) insérés entre lesdits sixièmes moyens (19) et lesdits septièmes moyens (24), chacun desdits huitième et neuvièmes moyens comportant des moyens formant ligne à retard (13), des multiplicateurs (14) reliés respectivement à une entrée et à une sortie desdits moyens de retard et disposés pour multiplier les signaux reçus par des entiers P et Q et des moyens (15) pour additionner les signaux de sortie provenant desdits multiplicateurs (14), lesdits dixièmes moyens (20) comportant un multiplicateur conçu pour multiplier les signaux reçus par la somme des entiers P et Q.

3. Dispositif selon la revendication 1 ou 2, **caractérisé en ce qu'**il comporte, en outre, des moyens pour incrémenter un desdits entiers S et T dans une direction déterminée par le signal de sortie desdits septièmes moyens (24) afin de réduire à un minimum la différence entre les valeurs comparées.

4. Dispositif selon la revendication 3, **caractérisé en ce que** la configuration est telle que l'entier S est incrémenté et en ce que ledit dispositif comporte, en outre, pour délivrer une valeur initiale d'essai de S, des moyens de mémorisation ( ⟨S⟩ fournissant une table de consultation et des moyens (27, 28) pour adresser ladite table de consultation avec des valeurs provenant desdits premiers moyens (10) et avec ledit entier T.

5. Procédé pour le calcul numérique des coordonnées d'un point sur une ligne droite à partir des valeurs d'une coordonnée (X), la valeur approchée de la deuxième coordonnée (Y) et un terme d'erreur (R) généré selon l'algorithme de Bresenham et constituant la valeur de l'erreur entre la valeur approchée de la deuxième coordonnée (Y) et la valeur exacte de la deuxième coordonnée du point sur la ligne, à une échelle prédéterminée (X1 - X0), de sorte que toutes les valeurs possibles du terme d'erreur (R) constituent des nombres entiers, **caractérisé en ce qu'**il comporte les étapes consistant à multiplier ladite valeur approchée de la deuxième coordonnée (Y) par ladite échelle prédéterminée (X1 - X0), ajouter la valeur approchée mise à l'échelle (Y) et le terme d'erreur mis à l'échelle (R), pour fournir une valeur de sortie, multiplier un premier entier d'essai S par ladite échelle prédéterminée (X1 - X0), pour fournir une première valeur pour comparaison, multiplier ladite valeur de sortie par un deuxième entier d'essai T pour obtenir une deuxième valeur pour comparaison, comparer lesdites première et deuxième valeurs et incrémenter un desdits entiers S et T jusqu'à ce que les première et deuxième valeurs soient sensiblement égales, grâce à quoi les coordonnées du point sur ladite ligne sont exprimées par la valeur numérique de la première coordonnée (X) et la valeur de la deuxième coordonnée (Y) exprimée par le nombre rationnel S / T.

6. Procédé selon la revendication 5, **caractérisé en ce que** la valeur approchée de ladite deuxième coordonnée (Y) et la valeur dudit terme d'erreur (R) sont dans chaque cas des valeurs intermédiaires à deux valeurs consécutives calculées numériquement et obtenues en multipliant lesdites valeurs consécutives par les entiers P et Q respectivement et en additionnant les valeurs consécutives multipliées, et en ce que ledit entier d'essai S est multiplié, en outre, par la somme des entiers P et Q avant ladite comparaison.

7. Procédé selon la revendication 5 ou 6, **caractérisé en ce que** ledit premier entier d'essai est obtenu en adressant une table de consultation (⟨⟨ look-up table ⟩⟩)avec l'entier T et la valeur approchée de ladite deuxième coordonnée (Y).

FIG.1

FIG.2

FIG.3

FIG.4